# EUROPÄISCHE PATENTSCHRIFT

(11) **EP 1 651 510 B1**
(45) Veröffentlichungstag und Bekanntmachung des Hinweises auf die Patenterteilung: **23.04.2008**
(21) Anmeldenummer: 04763635.2
(22) Anmeldetag: 29.07.2004
(51) Int. Cl.: B63B 35/79

(54) **VORRICHTUNG, INSBESONDERE SPORTGERÄT ZUM WELLENREITEN ODER DERGLEICHEN, UND VERFAHREN ZUR HERSTELLUNG VON FASERVERBUNDWERKSTOFFEN**
DEVICE, ESPECIALLY SPORTS DEVICE FOR SURFING OR SIMILAR AND METHOD FOR THE PRODUCTION OF FIBER COMPOSITE MATERIALS
DISPOSITIF, EN PARTICULIER INSTRUMENT SPORTIF POUR PRATIQUER LE SURF OU ANALOGUE, ET PROCEDE DE FABRICATION DE MATIERES COMPOSITES FIBREUSES

(30) Priorität: 30.07.2003 DE 10335198
(43) Veröffentlichungstag der Anmeldung: 03.05.2006
(73) Patentinhaber: Brauers, Sven, 30451 Hannover (DE); Brauers, Rouven, 2562 VX Den Haag (NL)
(72) Erfinder: Brauers, Sven, 30451 Hannover (DE); Brauers, Rouven, 2562 VX Den Haag (NL)
(74) Vertreter: Wagner, Carsten
(86) Internationale Anmeldenummer: PCT/EP2004/008545
(87) Internationale Veröffentlichungsnummer: WO 2005/012074

(56) Entgegenhaltungen:
- DE-A- 19 741 917
- FR-A- 2 534 188
- US-A- 4 428 998
- US-A- 4 753 836
- US-A- 5 275 860
- US-A- 6 106 345
- PATENT ABSTRACTS OF JAPAN Bd. 0154, Nr. 25 (C-0879), 29. Oktober 1991 (1991-10-29) & JP 3 177474 A (DAINIPPON PRINTING CO LTD), 1. August 1991 (1991-08-01)

## Beschreibung

Die Erfindung betrifft eine Vorrichtung, insbesondere Sportgeräte zum Wellenreiten oder dergleichen, und Verfahren zur Herstellung von Faserverbundwerkstoffen.

Bekannte Vorrichtungen zum Wellenreiten, wie Surfbretter, Skateboards, Skimboards, Wakeboards, Kneeboards oder Kiteboards können aus einem Grundkörper aus Schaumstoff bestehen, der in einem ersten Arbeitsschritt in eine gewünschte brettartige Form mit einer Ober- und Unterseite gebracht wird, und der in einem zweiten Arbeitsschritt mit Laminatbeschichtungen versehen wird. Dabei erfolgen die Laminatbeschichtungen in zwei aufeinanderfolgenden Fertigungsdurchgängen, da sowohl die Ober- als auch Unterseite des brettartigen Grundkörpers getrennt voneinander laminiert werden müssen, um eine vollständige Laminatummantelung des Grundkörpers zu erhalten. Jedoch kann die Laminatbeschichtung auch in einem Festigungsdurchgang erfolgen.

US 4,753,836 offenbart unter anderem eine Vorrichtung, insbesondere ein Sportgerät zum Wellenreiten oder dergleichen, mit einem Grundkörper aus Schaumstoff, der wenigstens eine Laminatbeschichtung aus einem Gewebelaminat und eine Bettungsmasse aufweist, wobei eine Zwischenschicht zwischen dem Grundkörper und der Laminatbeschichtung in Form eines Boards gegeben ist, wobei das Board auf den Grundkörper laminiert und das Gewebelaminat mit Bettungsmasse darüber auflaminiert wird.

Während des Gebrauchs ist beispielsweise ein Surfbrett einer erheblichen Belastung ausgesetzt, die zur Deformation des Surfbretts von bis zu 30 cm führen können. Hierbei tritt das Problem auf, daß sich die Laminatummantelung an den Stellen vom Grundkörper aus Schaumstoff löst, an denen es zu Stauchungen aufgrund der mechanischen Belastung des Surfbrettes kommt. Dieser Lösungsprozeß der Laminatummantelung schreitet bei weiterem Gebrauch des Surfbretts weiter fort und führt dazu, daß das Surfbrett nicht mehr bestimmungsgemäß verwendet werden kann und eventuell bricht.

Es ist daher Aufgabe der Erfindung, eine Vorrichtung, insbesondere Sportgeräte zum Wellenreiten und dergleichen, bereitzustellen, und ein Verfahren zur Herstellung von Faserverbundwerkstoffen anzugeben, bei dem sich trotz einer hohen mechanischen Belastungen die Laminatummantelung nicht vom Grundkörper aus Schaumstoff löst und die Bruchfestigkeit erhöht ist.

Die Lösung der Aufgabe der Erfindung geht aus von einer Vorrichtung nach dem Oberbegriff des Anspruchs 1 mit einem Grundkörper aus Schaumstoff, der wenigstens eine Laminabeschichtung aus einem Gewebelaminat und einer Bettungsmasse, mit einer Zwischenschicht zwischen dem Grundkörperund der Laminatbeschichtung, aufweist.

Durch eine Schaumstoff aufweisende Zwischenschicht mit Vertiefungen kann die Verbindung zwischen dem Grundkörper und einer Laminatummantelung, bestehend aus zwei Laminatbeschichtungen, auch unter extrem mechanischen Belastungen erheblich verbessert werden. Ferner kann so eine optimale Kombination von Leichtigkeit, Flexibilität sowie Stabilität erreicht werden.

In die Vertiefungen der Schicht aus Schaumstoff, die in den Grundkörper eingebracht wurde, kann die Bettungsmasse eindringen und so durch die vergrößerte Oberfläche und den verbesserten Eingriff durch die aufgerauhte Oberfläche eine verbesserte Verbindung zwischen der Oberfläche des Grundkörpers aus Schaumstoff und der Laminatummantelung bewirken.

Vorzugsweise ist vorgesehen, daß die Vertiefungen rillenförmig ausgebildet sind, so daß entlang der linienförmigen Rillen eine besonders feste Verbindung zwischen dem Grundkörper aus Schaumstoff und der Laminatummantelung gegeben ist.

In einer bevorzugten Ausführungsform ist vorgesehen, daß wenigstens abschnittsweise in die Rillen wenigstens abschnittsweise Gewebelaminat angeordnet ist. So kann eine deutliche Erhöhung der Festigkeit erreicht werden, indem beispielsweise eine Vielzahl, vorzugsweise 1 bis 20 in Längsrichtung verlaufende Rillen in den Grundkörper eingefräst werden und anschließend das Gewebelaminat in die Rillen eingedrückt wird, beispielsweise mit Hilfe eines geeigneten Werkzeugs. Dabei können die Rillen vor dem Eindrücken mit Bettungsmasse aufgefüllt werden. Das Gewebelaminat kann in Form von Gewebelaminatstreifen, beispielsweise mit einer Breite von 15 bis 35 cm, aufgebracht werden. Jedoch können auch Gewebelaminatstreifen kleinerer oder größerer Breite oder eine ganzflächige Gewebelaminatlage verwendet werden. Anschließend wird die Laminatbeschichtung durch Aufbringen einer Bettungsmasse abgeschlossen. So kann der Faseranteil auf bis zu 80 % erhöht werden, was die Stabilität und Festigkeit weiter erhöht.

Dabei weisen die Rillen eine Tiefe bis zu 4 cm auf, um eine auch extrem mechanischen Belastungen widerstehende Verbindung zwischen dem Grundkörper aus Schaumstoff und der Laminatummantelung bereitzustellen.

Dabei verlaufen die Rillen parallel und/oder sich kreuzend auf der Oberfläche des Grundkörpers, um eine richtungsunabhängige Verbesserung der Verbindung zu erreichen.

In einer weiteren Ausführungsform ist vorgesehen, daß die Vertiefungen senklochförmig ausgebildet sind. Die senklochförmigen Vertiefungen können konisch oder zylinderförmig ausgebildet sein und weisen dabei eine Tiefe bis zu 8 cm und einen Durchmesser bis zu 5 mm auf. Die Vertiefungen können aber auch die Ober- und Unterseite des brettförmigen Grundkörpers durch Bildung von Durchgängen miteinander verbinden, so daß die beiden Laminatbeschichtungen durch Bettungsmasse in den Durchgängen direkt miteinander verbunden sind. Vorzugsweise jedoch weisen die Vertiefungen eine Tiefe von 1 bis 2 cm und einen Durchmesser von 1 bis 3 mm auf, wobei die Vertiefungen vorzugsweise regelmäßig angeordnet sind. Somit weist der Grundkörper ein regelmäßiges Muster mit Vertiefungen auf, in die die Bettungsmasse eindringen kann und so die Verbindung zwischen dem Grundkörper aus Schaumstoff und der Laminatummantelung verbessert. Es kann der Grundkörper jedoch auch mit einem unregelmäßigen Muster versehen werden.

Vorzugsweise ist vorgesehen, daß die Zwischenschicht Material des Grundkörpers und der Bettungsmasse aufweist. Durch die Kombination dieser beiden Materialien in der Zwischenschicht weist die Zwischenschicht mechanischen Eigenschaften auf, die mechanische Spannungen abbauen, die an einer Grenzfläche zweier unterschiedlicher Materialien bei mechanischer Beanspruchung auftreten.

In einer weiteren Ausführungsform ist vorgesehen, daß die Zwischenschicht Material des Gewebelaminats aufweist. Dabei können Gewebelaminatabschnitte in den Grundkörper eingedrückt werden oder es wird der Grundkörper mit dem Gewebelaminat beschichtet und anschließend das Gewebelaminat punktuell in den Grundkörper eingedrückt (gestitcht). Hierzu können Vorrichtungen verwendet werden wie eine Stichsäge mit stumpfer Spitze oder eine abgestumpfte Nadelrolle. Eine derartige Vorrichtung widersteht auch extremen Belastungen.

Vorzugsweise besteht das Gewebelaminat aus Glasfasern, Aramid, Polyethylenfasern; Kohlefasern, Glasfilamentgewebe, Kohlegewebe, Fieberglasgewebe, Hanffasergewebe, Dyneema, Bambusgewebe, Texalium, Parabean, Fiberglasgelage/-gewebe Glasrovinggewebe oder einer Kombination aus den genannten Materialien.

Dabei beträgt in einer bevorzugten Ausführungsform das Gewebeflächengewicht bei Glasfasern 80 g/m² bis 480 g/m² und bei Aramid 60 g/m² bis 400 g/m². Wenn besonders hohe Belastungen zu erwarten sind, kann das Gewebeflächengewicht bei Glasfasern oder Aramid bis zu 1000 g/m² betragen.

Vorzugsweise weist das Gewebelaminat mindestens eine webart aus der Gruppe Leinen, Köper 1/3, Köper 2/2 unidirektional, Glasstapelfasergewebe, Glasrovinggewebe, Kohlegelege, Biaxialgelege, PE-Faser, Mischfaser oder Parabeam auf. Dabei ist Parabeam ein Abstandsgewebe.

Es können bekannte Schaumstoffe verwendet werden, jedoch vorzugsweise Schaumstoff aus Polyuretan oder Polystyrol, die einfach und kostengünstig zu verarbeiten sind. Ferner kann auch PVC, Core-Cell SAN (Syrene-Acryl-Nitrid), Polymerschaum SP 110, Phenolschaum verwendet werden. Dabei weist der Schaumstoff vorzugsweise eine geschlossene Zellstruktur auf. Es kann auch ein Schaumstoff mit offener Zellstruktur verwendet werden.

Vorzugsweise werden als Bettungsmasse ungesättigtes Polyesterharz (UP), Epoxidharz (EP), Vinylesterharz (VE) oder Polyuretanharz (PU) verwendet. Mit diesen Materialien lassen sich zusammen mit den oben genannten Gewebelaminaten problemlos Schaumstoffe wie Polyuretan oder Polystyrol beschichten bzw. ummanteln.

In einer besonderen Ausführungsform ist dabei die Bettungsmasse mit Füllstoffen versetzt. Hierbei kann es sich um Glashohlkugeln, Talkum, Holzmehl, Glasfaserschnipsel, Baumwollflocken, Alupulver, gemahlene Kohlefasern, Kreide, Quarzmehl, gemahlene Hanffasern, Kieselsäuren oder Farbstoffe oder eine Kombination hiervon handeln. Mit diesen Füllstoffen kann die Haftung und Verarbeitbarkeit der Bettungsmasse positiv beeinflußt werden sowie eine Anpassung der mechanischen Eigenschaften an die des Grundkörpers aus Schaumstoff erreicht werden, um so ein Lösen der Laminatbeschichtung bzw. -ummantelung vom Grundkörper zu vermeiden.

Das erfindungsgemäße Verfahren zur Herstellung eines Faserverbundwerkstoffes, insbesondere für Sportgeräte zum Wellenreiten oder dergleichen, geht aus von einem Verfahren mit den Schritten
1. einen Grundkörper aus Schaumstoff in eine gewünschte Form zu bringen,
2. den Grundkörper mittels Laminieren wenigstens teilweise zu beschichten,
wobei vor dem zweiten Schritt wenigstens ein Teil der zu beschichtenden Oberfläche des Grundkörpers mit Vertiefungen oder Erhöhungen versehen wird. Dabei beruht das erfindungsgemäße Verfahren auf der überraschenden Erkenntnis, daß sich eine Verbesserung der Verbindung zwischen dem Grundkörper und einer Laminatbeschichtung erreichen läßt, wenn nach dem Schritt 2 eine Zwischenschicht zwischen dem Grundkörper.und einer Laminatbeschichtung vorhanden ist, wobei die Zwischenschicht eine mit Vertiefungen versehene Schicht aus Schaumstoff aufweist.

Vorzugsweise bestehen die Vertiefungen aus Rillen und/oder Senklöchern, so daß entlang der linienförmigen Rillen und in die an der Oberfläche angeordneten Senklöcher die Bettungsmasse eindringen kann und eine Verbesserung der Verbindung zwischen dem Grundköper und der Laminatbeschichtung bewirkt.

In einer bevorzugten Ausführungsform ist vorgesehen, daß vor dem zweiten Schritt wenigstens in einen Teil der Vertiefungen Gewebepartikel eingebracht werden. Bei den Gewebepartikeln kann es sich um Abschnitte passender Größe des Gewebelaminats handeln oder um Abschnitte des Gewebelaminats, das flächig auf den Grundkörper aufgebracht wurde und an ausgewählten Punkten in den Grundkörper eingedrückt wurde (gestitcht). So kann eine Erhöhung des Faservolumens in der Zwischenschicht erreicht werden, die zu einer Erhöhung der mechanischen Belastbarkeit führt.

In einer weiteren Ausführungsform ist vorgesehen, daß die Vertiefungen vor dem Einbringen der Gewebepartikel mit einer Bettungsmasse wenigstens teilweise aufgefüllt werden. So kann ein besonders starker Faserverbundwerkstoff, insbesondere für ein Sportgerät zum Wellenreiten, erhalten werden.

Die Vertiefungen können durch Fräsen, beispielsweise mit einer CNC-Maschine, Bohren, Stanzen, Schneiden, Verdichten oder andere Verfahren hergestellt werden. Beispielsweise können eine Vielzahl, beispielsweise 1 bis 20 in Längsrichtung des Grundkörpers verlaufende Rillen durch Fräsen in den Grundkörper eingebracht werden. Dabei sind die eingebrachten Rillen derart dimensioniert, daß das Gewebelaminat wenigstens abschnittsweise in die Rillen eingedrückt werden kann, beispielsweise mit einem geeigneten Werkzeug, bevor die Laminatbeschichtung durch Aufbringen einer Bettungsmasse vervollständigt wird. Vor dem Eindrücken können die Rillen mit Bettungsmasse aufgefüllt werden. Alternativ kann das Auffüllen der Rillen auch später erfolgen. Mit dem Eindrücken von Gewebepartikeln kann ein Faseranteil von bis zu 80 % erreicht werden, was die Festigkeit und Stabilität erhöht. Ferner ist vorgesehen, daß die Rillen und/oder Senklöcher durch Eindrükken der Oberfläche des Grundkörpers hergestellt werden. Somit sind keine materialabhebenden Fertigungsverfahren nötig, die durch ihre Staubentwicklung gesundheitsbelastend sind.

Vorzugsweise ist vorgesehen, daß in einem ersten Schritt die Rillen hergestellt werden und in einem zweiten Schritt Senklöcher in die Oberfläche des Grundkörpers eingebracht werden. Dabei werden die Rillen vorzugsweise mittels einer Fräse erzeugt, während die Senklöcher auch mittels einer Nadelrolle erzeugt werden. Somit behindern die tiefer und größer ausgebildeten Senklöcher nicht das Einbringen von Rillen auf die Oberfläche des Grundkörpers mittels eines Kammes.

In einer bevorzugten Ausführungsform ist vorgesehen, daß nach dem Einbringen von Vertiefungen in die Oberfläche des Grundkörpers der Grundkörper mit der Bettungsmasse beschichtet wird. Durch diesen Beschichtungsvorgang kann die Bettungmasse in die vorher in die Oberfläche des Grundkörpers eingebrachten Rillen und/oder Senklöcher eindringen und zugleich die Verbindung mit dem aufzubringenden Gewebelaminat verbessern.

Es können unterschiedliche Bettungsmassen zum Beschichten und zum Laminieren verwendet werden. Jedoch ist vorzugsweise vorgesehen, daß die gleiche Bettungsmasse verwendet wird, so daß die Verbindung zwischen der in die Rillen und/oder Senklöcher eingebrachten Bettungsmasse und der zum Laminieren verwendeten Bettungsmasse optimiert ist.

In einer bevorzugten Ausführungsform erfolgt das Laminieren von Hand, unter Verwendung einer Vakuumpresse, dem Autoklav-Verfahren oder mittels des Injektionsverfahrens.

Beim Handlaminieren wird das Gewebelaminat auf den abgespachtelten Grundkörper gelegt. Danach wird Bettungsmasse auf das Gewebelaminat gegossen und in das auf dem Grundkörper liegende Gewebelaminat einmassiert. Als Werkzeuge hierfür dienen vor allem Pinsel und Rillenroller/Velourwalzen. Anschließend wird ein Abreißgewebe aufgelegt. Das aus beispielsweise Nylonfasern bestehende Abreißgewebe läßt sich nach dem Aushärten der Bettungsmasse abschälen bzw. abreißen und erzeugt so eine definiert rauhe, saubere und klebfreie Oberfläche, die weiter bearbeitet werden kann. Die Aushärtung der Laminate erfolgt drucklos bei Raumtemperatur. Es gibt warm und kalt aushärtende Bettungsmassen, die bei Temperaturen von 10 bis 230° C aushärten. Anschließend kann eine weitere Bearbeitung erfolgen.

Beim Vakuumpressen wird der zuvor handlaminierte Grundkörper in einen evakuierbaren Foliensack geschoben. Nach dem Absaugen der Luft preßt sich die Folie auf das Laminat und drückt es auf die Form. Der maximale Druck ist durch den Umgebungsluftdruck gegeben und beträgt ca. max. 1 Bar. Mit dem Vakuumpressen kann der Faseranteil des Laminats erhöht werden bzw. überschüssige Bettungsmasse herausgedrückt werden. Außerdem können leichte Stützstoffe wie Schaumkunststoffe oder Waben mit hochfesten Deckschichten aus Harz oder Gewebe verklebt werden und so ein extrem leichtes und starkes Bauteil bilden. Erforderlich ist ein gleichmäßiger Anpreßdruck. Dazu wird das Laminat zunächst mit einem Abreißgewebe und einer nicht haftenden Lochfolie abgedeckt. Darauf wird ein luftdurchlässiges Saugvlies gelegt, das die Aufgabe hat, das Vakuum gleichmäßig zu verteilen und überschüssige Bettungsmasse aus dem Laminat aufzusaugen. Die anschließende Aushärtung kann bei Raumtemperatur erfolgen, jedoch ist auch eine Temperung möglich.

Bei dem Autoklav-Verfahren wird auch ein Abreißgewebe, eine Lochfolie, ein Saugvlies und eine Vakuumfolie verwendet. Anschließend wird ein Vakuum erzeugt. Das Aushärten der Bettungsmasse kann unter einem Druck von 6 Bar und Temperaturen von 170° C oder bei Raumtemperatur erfolgen.

Ein weiteres Verfahren ist das Injektionsverfahren, bei dem trockenes Gewebelaminat auf den Grundkörper aufgelegt wird. Es folgen wieder ein Abreißgewebe, eine Lochfolie, ein Saugvlies und eine Vakuumfolie. Das Durchtränken des Gewebelaminats mit der Bettungsmasse erfolgt erst, nachdem ein Vakuum erzeugt wurde.

Eine weitere vorteilhafte Vorrichtung ist dadurch gekennzeichnet, daß diese eine wenigstens abschnittsweise Rauhheitselemente aufweisende Oberfläche aufweist. Durch eine derartige Strukturierung der Oberfläche kann der Wasserwiderstand erheblich reduziert werden, so daß deutlich höhere Geschwindigkeiten erreicht werden können.

Ein weiterer Vorteil ist, daß aufgrund der rauhen Oberfläche es nicht mehr nötig ist, zumindest die Oberseite eines derartigen Bretts mit Wachs einzureiben, das einen sicheren Stand auf dem Brett gewährleisten soll (und die Griffigkeit des Bretts erhöht). Somit entfällt das arbeitsintensive Beschichten mit Wachs, wobei nach Gebrauch des Bretts das Wachs entfernt werden muß, was ebenfalls sehr arbeitsintensiv ist. Zusätzlich ist problematisch, daß das Wachs unter Sonneneinstrahlung aufweicht und bei Kontakt kleben bleibt und so zu erheblichen Verschmutzungen, beispielsweise im Innenraum eines Pkws, führt.

Vorzugsweise ist vorgesehen, daß die Einkerbungen punktsymmetrisch ausgebildet sind und richtungsunabhängig angeordnet sind. Somit wird durch die Oberflächenstruktur nicht nur eine Geschwindigkeitserhöhung in einer Richtung erreicht, sondern es tritt eine Reduzierung des Wasserwiderstandes in alle Richtungen, also auch bei Rückwärts- oder Seitwärtsbewegungen auf. Somit eignet sich die erfindungsgemäße Struktur besonders für Surfboards, Wakeboards oder Kiteboards.

In einer bevorzugten Ausführungsform beträgt die maximale Rauhtiefe der Einkerbungen bis zu 1000 µm, vorzugsweise zwischen 60 bis 150 µm. Dabei ist die maximale Rauhtiefe definiert als senkrechter Abstand zwischen höchstem und tiefstem Punkt eines (gefilterten) Rauhheitsprofils innerhalb einer Meßstrecke nach DIN 4762.

Vorzugsweise liegt der Mittenrauhwert zwischen 5 und 100 µm, vorzugsweise zwischen 10 und 15 µm. Dabei ist der Mittenrauhwert definiert als das arithmetische Mittel der Profilabweichungen des (gefilterten) Rauhheitsprofils von der mittleren Linie innerhalb der Meßstrecke nach DIN 4786, DIN 4762 und ISO 4287/1.

Eine weitere vorteilhafte Ausführungsform des erfindungsgemäßen Verfahrens ist dadurch gekennzeichnet, daß die Oberfläche des laminierten Grundkörpers wenigstens abschnittsweise mit Rauhheitselementen versehen wird. Dabei weisen die Rauhheitselemente eine maximale Rauhtiefe bis zu 200 µm, vorzugsweise zwischen 60 bis 150 µm auf, wobei der Mittenrauhwert zwischen 5 und 50 µm, vorzugsweise zwischen 10 und 15 µm liegt, da experimentelle Untersuchungen gezeigt haben, daß bei diesen werten auf der einen Seite eine deutliche Reduzierung des Wasserwiderstandes erreicht wird und gleichzeitig eine ausreichende Griffigkeit der Oberfläche gegeben ist, die es ermöglicht, auf die Verwendung einer Wachsbeschichtung zu verzichten.

Diese Rauhheitselemente können durch Eindrücken oder Einpressen sowie durch spanabhebend Verfahren erzeugt werden. Jedoch ist vorzugsweise vorgesehen, daß während des Laminierens ein Abreißgewebe auf dem Grundkörper aufgebracht wird, das nach Abschluß des Laminierens wieder entfernt wird. Die Verwendung eines Abreißgewebes ist beim Laminieren von Hand, unter Verwendung einer Vakuumpresse beim Autoklav-Verfahren und dem Vakuum-Injektionsverfahren bekannt. Dabei wird das Abreißgewebe auf das Laminat aufgelegt, bevor die Bettungsmasse aushärtet.

In einer bevorzugten Ausführungsform ist vorgesehen, daß die mit Rauhheitselementen versehene Oberfläche mit einer Masse beschichtet wird. Diese Masse geeigneter dünnflüssiger Konsistenz dringt in die Vertiefungen ein und sammelt sich am Boden der Vertiefungen, so daß die Vertiefungen teilweise aufgefüllt werden und so durch Auffüllen der tiefsten Vertiefungen das Rauhheitsprofil homogenisiert wird.

Dabei ist vorgesehen, daß die dünnflüssige Masse Polyesterharz, Teflon, Epoxidharz, Acryllack oder Lotuslack enthält.

Vorzugsweise besteht das Abreißgewebe aus Nylonfasern und läßt sich nach dem Aushärten der Bettungsmasse abschälen bzw. abreißen. Das Abreißgewebe kann auch aus anderen Materialien bestehen, die nicht die Bettungsmasse aufsaugen und daher keine Verbindung mit der ausgehärteten Bettungsmasse eingehen. Nach dem Abreißen des Abreißgewebes verbleibt eine rauhe, saubere und klebfreie Oberfläche, die weiter bearbeitet werden kann. Dabei hat sich überraschenderweise gezeigt, daß die Oberflächenstruktur, die nach Entfernen des Abreißgewebes entstanden ist, mit richtungsunabhängigen Rauhheitselementen versehen ist, die zu einer spürbaren Reduzierung des Wasserwiderstands führen.

Vorzugsweise weist das Abreißgewebe die Webart Leinen oder Köper auf, die eine regelmäßige Struktur aufweisen.

In einer besonderen Ausführungsform weist das Abreißgewebe ein Flächengewicht zwischen 50 bis 120 g/m², vorzugsweise zwischen 90 bis 110 g/m² auf.

Im folgenden wird die Erfindung unter Bezugnahme auf eine Zeichnung erläutert.

Es zeigen:
- Fig. 1: einen schematischen Schnitt durch eine erfindungsgemäße Vorrichtung,
- Fig. 2: eine Aufsicht auf ein erstes Ausführungsbeispiel einer erfindungsgemäßen Vorrichtung,
- Fig. 3: eine Aufsicht auf ein weiteres Ausführungsbeispiel einer erfindungsgemäßen Vorrichtung, und
- Fig. 4: einen Querschnitt durch eine erfindungsgemäße Vorrichtung,
- Fig. 5-8: Oberflächenprofile eines erfindungsgemäßen Surfbretts.

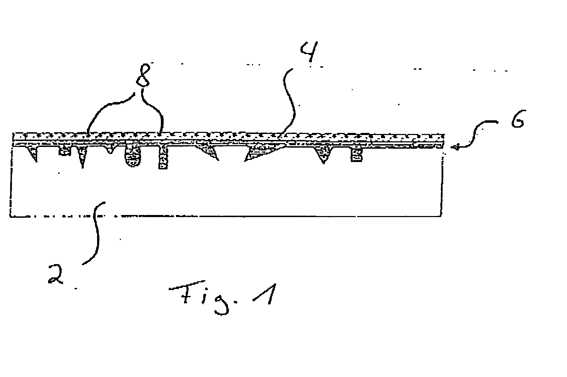

Es wird auf die Fig. 1 Bezug genommen.

Die Vorrichtung umfaßt einen Grundkörper 2 aus Polyuretan oder Polystyrol oder einem anderen Schaumstoff, dessen Oberseite mit einer Laminatbeschichtung 4 aus einem Gewebelaminat und einer Bettungsmasse versehen ist. Zwischen dem Grundkörper 2 und der Laminatbeschichtung 4 ist eine Zwischenschicht 6, die aus einem Oberflächenabschnitt des Grundkörpers 2 besteht, der mit einer Vielzahl von unterschiedlich geformten Vertiefungen versehen wurde, in die Bettungsmasse eingedrungen ist, mit der auch das Gewebelaminat durchtränkt wurde.

Auf der Oberseite der Laminatbeschichtung sind eine Vielzahl von Rauhheitselementen 8 angeordnet, die die Aufgabe haben, den Wasserwiderstand zu reduzieren.

Im folgenden wird das Verfahren zur Herstellung erläutert.

Der Grundkörper 2 wird mittels Schleifmaschinen, Hobeln, Sägen und Schmirgelpapier oder mittels einer CNC-Maschine in eine gwünschte Form, wie beispielsweise ein Surfbrett gebracht.

In einem weiteren Schritt werden mittels einer Fräse Rillen in die Oberfläche des Grundkörpers 2 gedrückt. Anschließend wird die gesamte Oberfläche des Grundkörpers 2 unter Verwendung einer groben Nadelrolle mit Senklöchern versehen. Danach wird dieser Arbeitsschritt mit der Nadelrolle mit kleineren Nadeln wiederholt. Dabei werden die Nadelrollen in verschiedenen Richtungen durchgeführt und diese Arbeitsschritte so oft wiederholt, bis sich eine gleichmäßige Struktur auf der Oberfläche ergibt. Durch die Kombination, mit Nadelrollen Senklöcher und mittels einer Fräse Rillen zu erzeugen, läßt sich eine besonders gute Haftung der Laminatbeschichtung 4 auf dem Grundkörper 2 erreichen.

In Bereichen mit hoher mechanischer Belastung kann die Oberfläche mit besonders vielen Vertiefungen versehen werden, um in diesen Bereichen eine besonders widerstandsfähige Verbindung zwischen dem Grundkörper 2 und der Laminatbeschichtung 4 zu erreichen.

Anschließend wird der gereinigte Grundkörper 2 mit der Bettungsmasse beschichtet bzw. abgespachtelt, damit die Bettungsmasse in die erzeugten Senklöcher und Rillen 10 läuft und so eine optimale Verbindung zwischen dem Grundkörper 2 und der Laminatummantelung 4 gewährleisten.

Durch dieses Beschichten des Grundkörpers 2 mit der Bettungsmasse wird gewährleistet, daß die Bettungsmasse in die Vertiefungen läuft, und nicht die Bettungsmasse von dem Gewebelaminat aufgesogen wird.

Als Bettungsmassen kommen folgende Harze in Frage: unsgesättigte Polyesterharze, Epoxidharze, Vinylesterharze und Polyuretanharze. Diese Harze können mit Füllstoffen wie Glashohlkugeln, Talkum, Holzmehl, Glasfaserschnipsel, Baumwollflocken, Alupulver, gemahlene Kohlefasern, Kreide, Quarzmehl, gemahlene Hanffasern, Kieselsäuren und Farbstoffen versehen werden.

Zu Beginn des eigentlichen Laminierens wird ein Glasfilamentgewebe, Aramidgewebe, Kohlegewebe, Fieberglasgewebe, Hanffasergewebe, Dyneema, Bambusgewebe bzw. Furnier oder ein Kombinationsgewebe aus den genannten Materialien auf einem separaten Tisch mit der Bettungsmasse versehen.

Anschließend wird das Gewebelaminat auf den Grundkörper 2 aufgelegt. Das Verhältnis der Gewebelaminatschichtdicken von der Ober- zu Unterseite kann 5:5 bis 6:4 betragen. Dabei überlappen sich die Laminatbeschichtungen der Ober- und Unterseiten, so daß im-Bereich der Verbindungskanten eine doppelte Laminatbeschichtung gegeben ist, um auch an den Verbindungskanten eine unter Belastungen ausreichend stabile Verbindung zu gewährleisten.

Eventuell eingeschlossene Luftblasen werden nach dem Auflegen des Gewebelaminats mit Hilfe eines Spachtels ausmassiert .

In einem weiteren Arbeitsschritt wird ein Abreißgewebe aufgebracht, das nicht saugfähig ist und daher die Bettungsmasse nicht aufnimmt. Das Abreißgewebe aus Nylon mit der Webart Leinen oder Köper weist ein Flächengewicht von 50 bis 120 g/m² auf. Das Abreißen des Abreißgewebes rauht die Oberfläche des Grundkörpers 2 auf, so daß eine abschließende Oberflächenbeschichtung besser haftet.

Eventuell während des Auflegens des Abreißgewebes eingeschlossene Luftblasen werden ebenfalls mit einem Spachtel ausmassiert.

Anschließend wird eine Vakuum-Lochfolie aufgelegt, die zum Pressen von Laminaten verwendet wird.

Es folgt ein Absaugvlies, das auf die Lochfolie aufgelegt wird, die dazu dient, die überschüssige Bettungsmasse aufzunehmen, die während des Vakuumprozesses herausgedrückt wird. Abschließend wird alles in einen Vakuumsack luftdicht eingeschlossen, der an eine Vakuumpumpe angeschlossen wird, so daß ein Druck von ca. 0,75 Bar für beispielsweise acht Stunden auf das Laminat wirkt. Nach Abschluß dieses Prozesses wird der laminierte Grundkörper 2 von dem Absaugvlies und der Lochfolie entfernt. Anschließend wird das Abreißgewebe entfernt. Nach dem Entfernen des Abreißgewebes verbleiben auf der Oberfläche eine Vielzahl von Rauhheitselementen 8, die punktsymmetrich ausgebildet sind und richtungsunabhängig angeordnet sind.

Es folgt die Beschichtung der zweiten Seite des brettförmigen Körpers, die auf entsprechende Art und Weise laminiert wird.

Zur Fertigstellung eines Surfbretts müssen noch Finnen- und Leashplugs gesetzt werden.

Damit ist das Verfahren zur Herstellung eines Surfboards abgeschlossen und das Surfbrett fertiggestellt. Das nochmalige Aufbringen einer Bettungsmasse und das arbeitsaufwendige anschließende Schleifen ist nicht mehr nötig, wobei das Surfbrett aufgrund der fehlenden letzten Beschichtung ca. 15 bis 20 % leichter ist.

Bei dieser Fertigungsmethode ist die Herstellung einer Negativform nicht nötig, sondern es können individuelle Formen mit einer Laminatummantelung versehen werden. Damit eignet sich das Verfahren nicht nur zur Herstellung von Faserverbundwerkstoffen für Sportgeräte, wie beispielsweise Surfbretter, sondern kann vorteilhaft auch in anderen Bereichen wie im Prothesenbau, in der Luftfahrt oder Fahrzeugbau eingesetzt werden.

Neben dem beschriebenen Vakuumverfahren kann auch ein Injektionsverfahren verwendet werden, bei dem das Gewebelaminat trocken auf dem mit Bettungsmasse beschichteten Grundkörper 2 aufgelegt wird. Anschließend wird durch das Vakuum die Bettungsmasse in das Gewebelaminat hineingesaugt, wobei die Bettungsmasse mit Transportkanälen versehen werden, die eine optimierte Verteilung der Bettungsmasse gewährleisten. Dabei bleibt die orientierung der Fasern des Gewebelaminats aufgrund der geringen Fließgeschwindigkeit der Bettungsmasse erhalten, was zu reproduzierbar guten mechanischen Eigenschaften führt.

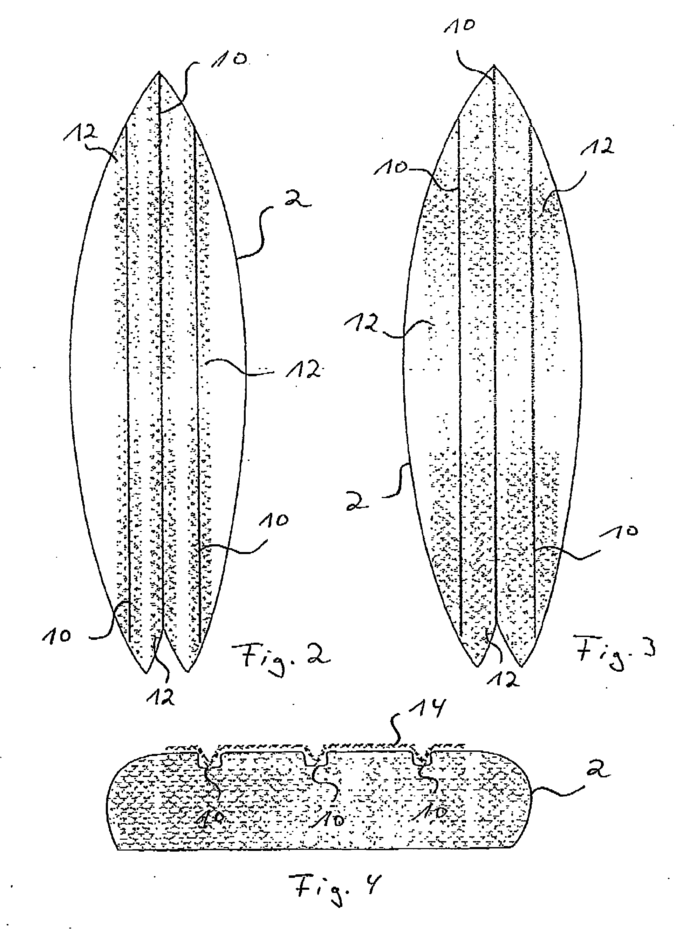

Es wird auf die Figuren 2 bis 4 beispielhaft Bezug genommen. Die surfbrettförmigen Grundkörper 2 sind mit drei in Längsrichtung verlaufenden Rillen 10 versehen, die vor dem Laminieren mit einer Bettungsmasse, beispielsweise einem Harz oder einer harzhaltigen Masse, aufgefüllt wurden. Es können jedoch auch andere Bettungsmassen verwendte werden. Auf die mit Bettungsmasse aufgefüllten Rillen 10 werden Gewebelaminatstreifen 12 mit einer Breite von 15 bis 20 cm (siehe Fig. 2) aufgebracht. Es können jedoch auch Gewebelaminatstreifen 12 mit einer größeren Breite (bis 35 cm) auf den Grundkörper 2 aufgebracht werden (siehe Fig. 3) oder es wird eine Gewebelaminatlage 14 ganzflächig aufgebracht. Vor einer abschließenden Laminatbeschichtung werden die Gewebelaminatstreifen 12 oder die Gewebelaminatlage 14 in die Rillen 10 eingedrückt, wobei die Abschnitte der eingedrückten Gewebelaminatstreifen 12 oder der Gewebelaminatlage 14 von der Bettungsmasse durchtränkt werden, mit der die Rillen 10 aufgefüllt sind.

Alternativ hierzu kann auch zuerst das Eindrücken der Gewebelaminatstreifen 12 oder der Gewebelaminatlage 14 in die Rillen 10 erfolgen, gefolgt von einem Schritt, in dem die Bettungsmasse auf den derart vorbereiteten Grundkörper 2 aufgebracht wird und in die Rillen 10 mit den abschnittsweise eingedrückten Gewebelaminatstreifen 12 oder Gewebelaminatlage 14 eindringt. Dabei kann das Eindrücken der Gewebelaminatstreifen 12 oder der Gewebelaminatlage 14 mit Hilfe eines Werkzeuges erfolgen.

Mit dem abschnitsweisen Eindrücken von Gewebelaminatstreifen 12 oder einer Gewebelaminatlage 14 kann der Faseranteil auf bis zu 80 % erhöht werden, was eine weitere Steigerung der Festigkeit und Stabilität bewirkt.

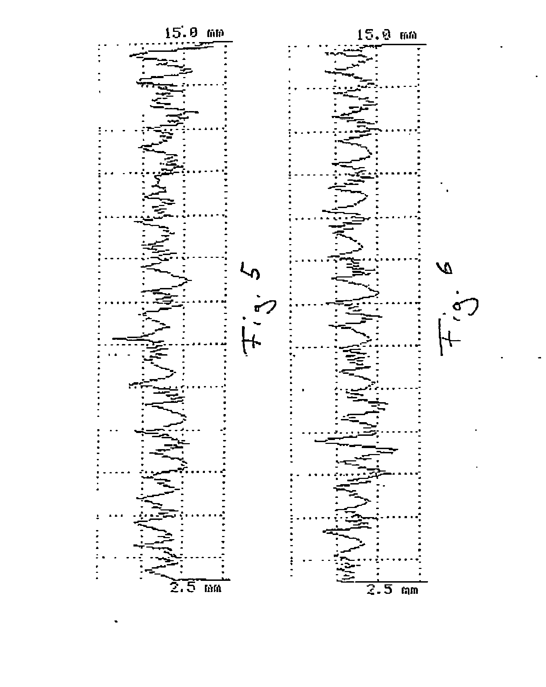

Es wird auf die Figuren 5 bis 8 Bezug genommen.

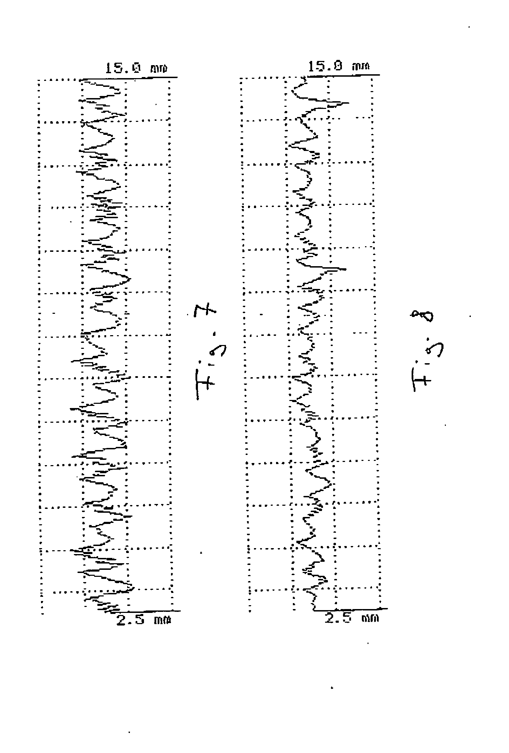

Die Figuren 5 bis 8 zeigen Oberflächenprofile von erfindungsgemäßen Surfbrettern. Die maximale Rauhtiefe ist als senkrechter Abstand zwischen höchstem und tiefstem Punkt des gefilterten Rauhheitsprofils innerhalb der Bezugsstrecke. Dabei weist das Oberflächenprofil der Figur 5 eine maximale Rauhtiefe von 118,5 µm auf, während das Oberflächenprofil der Figur 6 eine maximale Rauhtiefe von 96,64 µm, das Oberflächenprofil der Figur 7 eine maximale Rauhtiefe von 71,20 µm und das Oberflächenprofil der Figur 8 eine maximale Rauhtiefe von 140,8 µm aufweist.

Der Mittenrauhwert, der als das arithmetische Mittel der Profilabweichung des (gefilterten) Rauhheitsprofils von der mittleren Linie innerhalb der Meßstrekke nach DIN 4786, DIN 4762 und ISO 4287/1 definiert ist, beträgt bei dem Oberflächenprofil der Figur 5 12,62 µm, bei dem Oberflächenprofil gemäß Figur 6 12,09 µm, bei dem Oberflächenprofil der Figur 7 11,6 µm und bei dem Oberflächenprofil der Figur 8 12,88 µm. Mit diesen Oberflächenprofilen konnte eine deutliche Verbesserung der Surfeigenschaften erzielt werden.

## Patentansprüche

1. Vorrichtung, insbesondere ein Sportgerät zum Wellenreiten oder dergleichen, mit einem Grundkörper (2) aus Schaumstoff, der wenigstens eine Laminatbeschichtung (4) aus einem Gewebelaminat und einer Bettungsmasse aufweist,
mit einer Zwischenschicht (6) zwischen dem Grundkörper (2) und der Laminatbeschichtung (4),
**dadurch gekennzeichnet, daß** die Zwischenschicht (6) eine mit Vertiefungen versehene Schicht aus Schaumstoff aufweist.

2. Vorrichtung nach Anspruch 1, **dadurch gekennzeichnet, daß** die Zwischenschicht (6) Material des Grundkörpers (2) und der Bettungsmasse aufweist.

3. Vorrichtung nach Anspruch 2, **dadurch gekennzeichnet, daß** die Zwischenschicht (6) Material des Gewebelaminats aufweist.

4. Vorrichtung nach Anspruch 3, **dadurch gekennzeichnet, daß** die Vertiefungen rillenförmig ausgebildet sind.

5. Vorrichtung nach Anspruch 4, **dadurch gekennzeichnet, daß** wenigstens abschnittsweise in die Rillen (10) wenigstens abschnittsweise Gewebelaminat angeordnet ist.

6. Vorrichtung nach einem der Ansprüche 4 oder 5, **dadurch gekennzeichnet, daß** die Rillen (10) eine Tiefe bis zu 6 cm aufweisen.

7. Vorrichtung nach einem der Ansprüche 4, 5 oder 6, **dadurch gekennzeichnet, daß** die Rillen (10) parallel und/oder sich kreuzend angeordnet sind.

8. Vorrichtung nach einem der vorherigen Ansprüche, **dadurch gekennzeichnet, daß** die Vertiefungen senklochförmig ausgebildet sind.

9. Vorrichtung nach Anspruch 8, **dadurch gekennzeichnet, daß** die senklochförmigen Vertiefungen konisch oder zylinderförmig ausgebildet sind und eine Tiefe bis zu 8 cm, vorzugsweise 1 bis 2 mm, und einen Durchmesser bis zu 5 mm, vorzugsweise 1 bis 3 mm aufweisen.

10. Vorrichtung nach einem der Ansprüche 3 bis 9, **dadurch gekennzeichnet, daß** die Vertiefungen regelmäßig angeordnet sind.

11. Vorrichtung nach einem der Ansprüche 3 bis 9, **dadurch gekennzeichnet, daß** die Vertiefungen unregelmäßig angeordnet sind.

12. Vorrichtung nach einem der vorherigen Ansprüche, **dadurch gekennzeichnet, daß** das Gewebelaminat aus Glasfasern, Aramid, Polyethlenfasern, Kohlefasern, Glasfilamentgewebe, Kohlegewebe, Fieberglasgewebe, Hanffasergewebe, Dyneema, Bambusgewebe, Texalium oder aus einer Kombination hiervon besteht.

13. Vorrichtung nach einem der vorherigen Ansprüche,
**dadurch gekennzeichnet, daß** das Gewebeflächengewicht bei Glasfasern und Aramid bis zu 1000 g/m², insbesondere bei den Glasfasern 80 g/m² bis 480 g/m² und bei Aramid 60 g/m² bis 400 g/m², beträgt.

14. Vorrichtung nach einem der vorherigen Ansprüche, **dadurch gekennzeichnet, daß** das Gewebelaminat mindestens einer Webart aus der Gruppe Leinen, Köper 1/3, Köper 2/2, unidirektional, Glasstapelfasergewebe, Glasrovinggewebe, Atlasgewebe, Kohlegelege, PE-Faser, Mischfaser oder Parabeam (Abstandagewebe), Biaxialgelege entsprechen.

15. Vorrichtung nach einem der vorherigen Ansprüche, **dadurch gekennzeichnet, daß** der Schaumstoff aus Polyurethan oder Polystyrol, PVC, Core-Cell, SAN (Syrene-Acryl-Nitrid), Polymerschaum SP 110 oder Phenolschaum besteht.

16. Vorrichtung nach einem der vorherigen Ansprüche, **dadurch gekennzeichnet, daß** der Schaumstoff eine geschlossene Zellstruktur aufweist.

17. Vorrichtung nach einem der vorherigen Ansprüche, **dadurch gekennzeichnet, daß** der Schaumstoff eine offene Zellstruktur aufweist.

18. Vorrichtung nach einem der vorherigen Ansprüche, **dadurch gekennzeichnet, daß** die Bettungsmasse ein ungesättigtes Polyesterharz (UP), ein Epoxidharz (EP), ein Vinylesterharz (VE) oder ein Polyurethanharz (PU) ist.

19. Vorrichtung nach einem der vorherigen Ansprüche **dadurch gekennzeichnet, daß** die Bettungsmasse mit Füllstoffen versetzt ist.

20. Vorrichtung nach Anspruch 19, **dadurch gekennzeichnet, daß** es sich bei den Füllstoffen um Glashohlkugeln, Talkum, Holzmehl, Glasfaserschnipsel, Baumwollflocken, Alupulver, gemahlene Kohlefasern, Kreide, Quarzmehl, gemahlene Hanffasern, Kieselsäuren oder Farbstoffe oder eine Kombination hiervon handelt.

21. Verfahren zur Herstellung eines Faserverbundwerkstoffes, insbesondere für Sportgeräte zum Wellenreiten oder dergleichen, mit den Schritten
1. einen Grundkörper (2) aus Schaumstoff in eine gewünschte Form zu bringen,
2. den Grundkörper (2) mittels Laminieren wenigstens teilweise zu beschichten,
wobei vor dem zweiten Schritt wenigstens ein Teil der zu beschichtenden Oberfläche des Grundkörpers (2) mit Vertiefungen versehen wird, **dadurch gekennzeichnet, daß** nach dem Schritt 2 eine Zwischenschicht (6) zwischen dem Grundkörper (2) und einer Laminatbeschichtung (4) vorhanden ist, wobei die Zwischenschicht (6) eine mit Vertiefungen versehene Schicht aus Schaumstoff aufweist.

22. Verfahren nach Anspruch 21, **dadurch gekennzeichnet, daß** vor dem zweiten Schritt wenigstens in einen Teil der Vertiefungen Gewebepartikel eingebracht werden.

23. Verfahren nach Anspruch 22, **dadurch gekennzeichnet, daß** die Vertiefungen mit einer Bettungsmasse wenigstens teilweise aufgefüllt werden, bevor die Gewebepartikel eingebracht werden.

24. Verfahren nach einem der Ansprüche 21 bis 23, **dadurch gekennzeichnet, daß** die Vertiefungen aus Rillen (10) und/oder Senklöchern bestehen.

25. Verfahren nach einem der Ansprüche 21 bis 24, **dadurch gekennzeichnet, daß** die Rillen (10) und/oder Senklöcher durch Eindrücken, Fräsen, Schneiden und/oder Verdichten der Oberfläche des Grundkörpers (2) hergestellt werden.

26. Verfahren nach einem der Ansprüche 21 bis 25, **dadurch gekennzeichnet, daß** in einem ersten Schritt Rillen (10) hergestellt werden und in einem zweiten Schritt Senklöcher in die Oberfläche des Grundkörpers (2) eingebracht werden.

27. Verfahren nach einem der vorherigen Ansprüche, **dadurch gekennzeichnet, daß** die Rillen (10) mittels eines geeigneten Werkzeugs erzeugt werden.

28. Verfahren nach einem der vorherigen Ansprüche, **dadurch gekennzeichnet, daß** die Senklöcher mittels einer Nadelrolle erzeugt werden.

29. Verfahren nach einem der vorherigen Ansprüche, **dadurch gekennzeichnet, daß** nach dem Einbringen von Vertiefungen in die Oberfläche des Grundkörpers (2) der Grundkörper (2) mit einer Bettungsmasse beschichtet wird.

30. Verfahren nach Anspruch 29, **dadurch gekennzeichnet, daß** die Bettungsmasse auch zum Laminieren mit einem Gewebelaminat verwendet wird.

31. Verfahren nach einem der vorherigen Ansprüche, **dadurch gekennzeichnet, daß** das Laminieren von Hand, unter Verwendung einer Vakuumpresse, gemäß dem Autoklav-Verfahren oder mittels eines Vakuum-Injektionsverfahrens erfolgt.

32. Vorrichtung nach einem der Ansprüche 1 bis 20, **gekennzeichnet durch** wenigstens eine abschnittsweise Rauhheitselemente (8) aufweisende Oberfläche.

33. Vorrichtung nach Anspruch 32, **dadurch gekennzeichnet, daß** die Rauhheitselemente (8) punktsymmetrisch ausgebildet sind und richtungsunabhängig angeordnet sind.

34. Vorrichtung nach Anspruch 32 oder 33, **dadurch gekennzeichnet, daß** die maximale Rauhtiefe der Rauhheitselemente (8) bis zu 1000 µm beträgt, vorzugsweise zwischen 60 bis 150 µm.

35. Vorrichtung nach einem der Ansprüche 32, 33 oder 34, **dadurch gekennzeichnet, daß** der Mittenrauhwert zwischen 5 und 100 µm, vorzugsweise 10 und 15 µm, liegt.

36. Vorrichtung nach einem der Ansprüche 32 bis 35, **gekennzeichnet durch** eine Zwischenschicht nach einem der Ansprüche 1 bis 20.

37. Verfahren nach einem der Ansprüche 21 bis 31, **dadurch gekennzeichnet, daß** die Oberfläche des laminierten Grundkörpers (2) wenigstens abschnittsweise mit Rauhheitselementen (8) versehen wird.

38. Verfahren nach Anspruch 37, **dadurch gekennzeichnet, daß** die mit Rauhheitselementen versehene Oberfläche mit einer Masse beschichtet wird.

39. Verfahren nach Anspruch 38, **dadurch gekennzeichnet, daß** die Masse Polyesterharz, Teflon, Epoxidharz, Acryllack oder Lotuslack enthält.

40. Verfahren nach Anspruch 37 bis 39, **dadurch gekennzeichnet, daß** während des Laminierens ein Abreißgewebe auf den Grundkörper (2) aufgebracht wird, das nach Abschluß des Laminierens entfernt wird.

41. Verfahren nach einem der Ansprüche 37 bis 40, **dadurch gekennzeichnet, daß** das Abreißgewebe aus Nylon oder Polyester besteht.

42. Verfahren nach einem der Ansprüche 37 bis 41, **dadurch gekennzeichnet, daß** das Abreißgewebe die Webart Leinen oder Köper aufweist.

43. Verfahren nach einem der Ansprüche 37 bis 42, **dadurch gekennzeichnet, daß** das Flächengewicht des Abreißgewebes zwischen 50 bis 120 g/m², vorzugsweise zwischen 90 bis 110 g/m² beträgt.

44. Verfahren nach einem der Ansprüche 37 bis 43, **gekennzeichnet durch** ein Verfahren mit Schritten nach einem der Ansprüche 21 bis 31.

## Claims

1. Device, in particular a piece of sports equipment for surfing or the like, comprising a base body (2) made of foamed material which has at least one laminate coating (4) made of a woven fabric laminate and a ballast compound, with an intermediate layer (6) between the base body (2) and the laminate coating (4), **characterised in that** the intermediate layer (6) has a layer which is provided with indentations and made of foamed material.

2. Device according to claim 1, **characterised in that** the intermediate layer (6) has material of the base body (2) and of the ballast compound.

3. Device according to claim 2, **characterised in that** the intermediate layer (6) has material of the woven fabric laminate.

4. Device according to claim 3, **characterised in that** the indentations are groove-shaped.

5. Device according to claim 4, **characterised in that**, at least in sections, woven fabric laminate is arranged, at least in sections, in the grooves (10).

6. Device according to either of claims 4 or 5,
**characterised in that** the grooves (10) have a depth of up to 6 cm.

7. Device according to any one of claims 4, 5 or 6,
**characterised in that** the grooves (10) are arranged in parallel and/or intersecting one another.

8. Device according to any one of the preceding claims, **characterised in that** the indentations are sinkhole-shaped.

9. Device according to claim 8, **characterised in that** the sinkhole-shaped indentations are conical or cylindrical and have a depth of up to 8 cm, preferably 1 to 2 mm and a diameter of up to 5 mm, preferably 1 to 3 mm.

10. Device according to any one of claims 3 to 9,
**characterised in that** the indentations are regularly arranged.

11. Device according to any one of claims 3 to 9,
**characterised in that** the indentations are irregularly arranged.

12. Device according to any one of the preceding claims, **characterised in that** the woven fabric laminate consists of glass fibres, aramid, polyethylene fibres, carbon fibres, glass filament fabric, carbon fabric, fibre glass fabric, hemp fibre fabric, Dyneema, bamboo fabric, Texalium or a combination thereof.

13. Device according to any one of the preceding claims, **characterised in that** the fabric mass per unit area in the case of glass fibres and aramid is up to 1,000 g/m², in particular 80 g/m² to 480 g/m² in the glass fibres and 60 g/m² to 400 g/m² in aramid.

14. Device according to any one of the preceding claims, **characterised in that** the woven fabric laminate corresponds to at least one type of weave from the group of linen, twill 1/3, twill 2/2, unidirectional, glass staple fibre fabric, woven glass roving fabric, satin fabric, carbon layers, PE fibres, mixed fibres or Parabeam (spacer fabric), biaxial layers.

15. Device according to any one of the preceding claims, **characterised in that** the foamed material consists of polyurethane or polystyrene, PVC, core-cell, SAN (styrene-acrylic-nitride), polymer foam SP 110 or phenolic foam.

16. Device according to any one of the preceding claims, **characterised in that** the foamed material has a closed cell structure.

17. Device according to any one of the preceding claims, **characterised in that** the foamed material has an open cell structure.

18. Device according to any one of the preceding claims, **characterised in that** the ballast compound is an unsaturated polyester resin (UP), an epoxy resin (EP), a vinyl ester resin (VE) or a polyurethane resin (PE).

19. Device according to any one of the preceding claims, **characterised in that** fillers are added to the ballast compound.

20. Device according to claim 19, **characterised in that** the fillers are hollow glass beads, talcum, wood flour, glass fibre chips, cotton flock, aluminium powder, ground carbon fibres, chalk, ground quartz, ground hemp fibres, silicic acids or dyes, or a combination thereof.

21. Method for producing a fibre composite material, in particular for pieces of sports equipment for surfing or the like, comprising the steps
1. forming a base body (2) made of foamed material into a desired shape,
2. at least partially coating the base body (2) by means of lamination,
at least a part of the surface of the base body (2) to be coated being provided with indentations before the second step, **characterised in that** after the step 2 an intermediate layer (6) is present between the base body (2) and a laminate coating (4), the intermediate layer (6) having a layer provided with indentations and made of foamed material.

22. Method according to claim 21, **characterised in that** woven fabric particles are introduced into at least some of the indentations before the second step.

23. Method according to claim 22, **characterised in that** the indentations are at least partially filled with a ballast compound before the woven fabric particles are introduced.

24. Method according to any one of claims 21 to 23, **characterised in that** the indentations consist of grooves (10) and/or sinkholes.

25. Method according to any one of claims 21 to 24, **characterised in that** the grooves (10) and/or sinkholes are produced by pressing-in, milling, cutting and/or compressing the surface of the base body (2).

26. Method according to any one of claims 21 to 25, **characterised in that**, in a first step, grooves (10) are produced and, in a second step, sinkholes are introduced into the surface of the base body (2).

27. Method according to any one of the preceding claims, **characterised in that** the grooves (10) are produced by means of a suitable tool.

28. Method according to any one of the preceding claims, **characterised in that** the sinkholes are produced by means of a needle roller.

29. Method according to any one of the preceding claims, **characterised in that** after the introduction of indentations into the surface of the base body (2), the base body (2) is coated with a ballast compound.

30. Method according to claim 29, **characterised in that** the ballast compound is also used for lamination with a woven fabric laminate.

31. Method according to any one of the preceding claims, **characterised in that** the lamination takes place by hand, using a vacuum press, by the autoclave method or by means of a vacuum injection method.

32. Device according to any one of claims 1 to 20 **characterised by** at least one surface having roughness elements (8) in sections.

33. Device according to claim 32, **characterised in that** the roughness elements (8) are configured point-symmetrically and are arranged independently of the direction.

34. Device according to claim 32 or 33, **characterised in that** the maximum roughness depth of the roughness elements (8) is up to 1,000 µm, preferably between 60 and 150 µm.

35. Device according to any one of claims 32, 33 or 34, **characterised in that** the mean roughness value is between 5 and 100 µm, preferably 10 and 15 µm.

36. Device according to any one of claims 32 to 35, **characterised by** an intermediate layer according to any one of claims 1 to 20.

37. Method according to any one of claims 21 to 31, **characterised in that** the surface of the laminated base body (2) is provided at least in sections with roughness elements (8).

38. Method according to claim 37, **characterised in that** the surface provided with roughness elements is coated with a compound.

39. Method according to claim 38, **characterised in that** the compound contains polyester resin, Teflon, epoxy resin, acrylic lacquer or lotus lacquer.

40. Method according to claim 37 to 39, **characterised in that** a tear-off fabric is applied to the base body (2) during the lamination, which is removed after completion of the lamination.

41. Method according to any one of claims 37 to 40, **characterised in that** the tear-off fabric consists of nylon or polyester.

42. Method according to any one of claims 37 to 41, **characterised in that** the tear-off fabric has the linen or twill type of weave.

43. Method according to any one of claims 37 to 42, **characterised in that** the mass per unit area of the tear-off fabric is between 50 and 120 g/m², preferably between 90 and 110 g/m².

44. Method according to any one of claims 37 to 43, **characterised by** a method with steps according to any one of claims 21 to 31.

## Revendications

1. Dispositif, en particulier engin sportif pour le surf ou analogue, avec un corps de base (2) en mousse expansée, comportant au moins un revêtement stratifié (4) composé d'un stratifié textile et d'une masse de fond,
avec une couche intercalaire (6) entre le corps de base (2) et le revêtement stratifié (4),
**caractérisé en ce que** la couche intercalaire (6) comporte une couche en mousse expansée pourvue d'évidements.

2. Dispositif selon la revendication 1, **caractérisé en ce que** la couche intercalaire (6) comprend du matériau du corps de base (2) et de la masse de fond.

3. Dispositif selon la revendication 2, **caractérisé en ce que** la couche intercalaire (6) comprend du matériau du stratifié textile.

4. Dispositif selon la revendication 3, **caractérisé en ce que** les évidements sont ménagés en forme de rainures.

5. Dispositif selon la revendication 4, **caractérisé en ce que**, au moins par secteur, du stratifié textile est disposé au moins partiellement dans les rainures (10).

6. Dispositif selon l'une des revendications 4 ou 5, **caractérisé en ce que** les rainures (10) présentent une profondeur allant jusqu'à 6 cm.

7. Dispositif selon l'une des revendications 4, 5 ou 6, **caractérisé en ce que** les rainures (10) sont disposées parallèles et/ou se croisant.

8. Dispositif selon l'une des revendications précédentes, **caractérisé en ce que** les évidements sont réalisés en forme de des trous borgnes.

9. Dispositif selon la revendication 8, **caractérisé en ce que** les évidements en forme de trous borgnes sont exécutés avec une forme conique ou cylindrique et présentent une profondeur allant jusqu'à 8 cm, de préférence de 1 à 2 mm, et un diamètre allant jusqu'à 5 mm, de préférence de 1 à 3 mm.

10. Dispositif selon l'une des revendications 3 à 9, **caractérisé en ce que** les évidements sont régulièrement distribués.

11. Dispositif selon l'une des revendications 3 à 9, **caractérisé en ce que** les évidements sont irrégulièrement distribués.

12. Dispositif selon l'une des revendications précédentes, **caractérisé en ce que** le stratifié textile est composé de fibres de verre, d'aramide, de fibres de polyéthylène, de fibres de carbone, de tissu de filaments de verre, de tissu de carbone, de tissu de fibres de verre, de tissu de fibres de chanvre, de Dyneema, de tissu de bambou, de Texalium ou d'une combinaison de ceux-ci.

13. Dispositif selon l'une des revendications précédentes, **caractérisé en ce que** le poids surfacique du tissu peut atteindre 1000 g/m² pour des fibres de verre et de l'aramide, en particulier de 80 g/m² à 480 g/m² pour les fibres de verre et de 60 g/m² à 400 g/m² pour l'aramide.

14. Dispositif selon l'une des revendications précédentes, **caractérisé en ce que** le stratifié textile correspond à au moins un tissage des groupes lin, sergé 1/3, sergé 2/2, unidirectionnel, verranne, stratifil de verre, satin, non-tissé de carbone, fibres PE, fibres mélangées ou Parabeam (fibres sandwich), non-tissé biaxial.

15. Dispositif selon l'une des revendications précédentes, **caractérisé en ce que** la mousse expansée est en polyuréthanne ou polystyrène, PVC, CoreCell, SAN (nitrure de styrène acrylique), mousse polymère SP 110 ou mousse de phénol.

16. Dispositif selon l'une des revendications précédentes, **caractérisé en ce que** la mousse expansée présente une structure cellulaire fermée.

17. Dispositif selon l'une des revendications précédentes, **caractérisé en ce que** la mousse expansée présente une structure cellulaire ouverte.

18. Dispositif selon l'une des revendications précédentes, **caractérisé en ce que** la masse de fond est une résine polyester non saturée (UP), une résine époxyde (EP), une résine vinyl-ester (VE) ou une résine polyuréthanne (PU).

19. Dispositif selon l'une des revendications précédentes, **caractérisé en ce que** des matières de charge sont ajoutées à la masse de fond.

20. Dispositif selon la revendication 19, **caractérisé en ce que** les matières de charge sont des billes creuses de verre, du talc, de la farine de bois, des copeaux de fibre de verre, des flocons de coton, de la poudre d'aluminium, des fibres de carbone broyées, de la craie, de la farine de quartz, des fibres de chanvre broyées, des silices ou des colorants, ou une combinaison de ceux-ci.

21. Procédé de fabrication d'un matériau composite fibreux, en particulier pour des engins sportifs pour le surf ou analogue, comprenant les étapes suivantes :
1. donner la forme souhaitée à un corps de base (2) en mousse expansée,
2. revêtir au moins partiellement le corps de base (2) par stratification,
dans lequel, antérieurement à la deuxième étape, des évidements sont ménagés sur au moins une partie de la surface à revêtir du corps de base (2), **caractérisé en ce que** consécutivement à l'étape 2, une couche intercalaire (6) est présentée entre le corps de base (2) et un revêtement stratifié (4), ladite couche intercalaire (6) comportant une couche en mousse expansée où sont ménagés des évidements.

22. Procédé selon la revendication 21, **caractérisé en ce qu'**antérieurement à la deuxième étape, des particules textiles sont introduites dans au moins une partie des évidements.

23. Procédé selon la revendication 22, **caractérisé en ce que** les évidements sont au moins partiellement comblés avec une masse de fond, avant l'introduction des particules textiles.

24. Procédé selon l'une des revendications 21 à 23, **caractérisé en ce que** les évidements sont formés de rainures (10) et/ou de trous borgnes.

25. Procédé selon l'une des revendications 21 à 24, **caractérisé en ce que** les rainures (10) et/ou les trous borgnes sont exécutés par poinçonnage, fraisage, découpe et/ou compression de la surface du corps de base (2).

26. Procédé selon l'une des revendications 21 à 25, **caractérisé en ce que** des rainures (10) sont exécutées dans la surface du corps de base (2) lors d'une première étape, et des trous borgnes lors d'une deuxième étape.

27. Procédé selon l'une des revendications précédentes, **caractérisé en ce que** les rainures (10) sont exécutées au moyen d'un outil approprié.

28. Procédé selon l'une des revendications précédentes, **caractérisé en ce que** les trous borgnes sont exécutés au moyen d'un rouleau à aiguilles.

29. Procédé selon l'une des revendications précédentes, **caractérisé en ce que** le corps de base (2) est revêtu d'une masse de fond après exécution des évidements dans la surface du corps de base (2).

30. Procédé selon la revendication 29, **caractérisé en ce que** la masse de fond est également utilisée pour la stratification avec un stratifié textile.

31. Procédé selon l'une des revendications précédentes, **caractérisé en ce que** la stratification est effectuée manuellement en recourant à une presse à vide, suivant le procédé en autoclave, ou au moyen d'un procédé d'injection sous vide.

32. Dispositif selon l'une des revendications 1 à 20, **caractérisé par** au moins une surface comportant partiellement des éléments de rugosité (8).

33. Dispositif selon la revendication 32, **caractérisé en ce que** les éléments de rugosité (8) sont exécutés avec une symétrie ponctuelle et disposés indépendamment d'une direction.

34. Dispositif selon la revendication 32 ou 33, **caractérisé en ce que** la profondeur maximale des éléments de rugosité (8) va jusqu'à 1000 µm, et est de préférence comprise entre 60 et 150 µm.

35. Dispositif selon l'une des revendications 32, 33 ou 34, **caractérisé en ce que** la valeur moyenne de la rugosité est comprise entre 5 et 100 µm, de préférence entre 10 et 15 µm.

36. Dispositif selon l'une des revendications 32 à 35, **caractérisé par** une couche intercalaire selon l'une des revendications 1 à 20.

37. Procédé selon l'une des revendications 21 à 31, **caractérisé en ce que** la surface du corps de base stratifié (2) est au moins partiellement pourvue d'éléments de rugosité (8).

38. Procédé selon la revendication 37, **caractérisé en ce que** la surface pourvue d'éléments de rugosité est revêtue d'une masse.

39. Procédé selon la revendication 38, **caractérisé en ce que** la masse contient de la résine de polyester, du Téflon, de la résine époxyde, de la laque acrylique ou de la laque à effet perlant.

40. Procédé selon les revendications 37 à 39, **caractérisé en ce qu'**un tissu déchirable est appliqué sur le corps de base (2) pendant la stratification, lequel est ôté à l'issue de la stratification.

41. Procédé selon l'une des revendications 37 à 40, **caractérisé en ce que** le tissu déchirable est en nylon ou en polyester.

42. Procédé selon l'une des revendications 37 à 41, **caractérisé en ce que** le tissu déchirable comprend un tissage de lin ou de sergé.

43. Procédé selon l'une des revendications 37 à 42, **caractérisé en ce que** le poids surfacique du tissu déchirable est compris entre 50 g/m² et 120 g/m², de préférence entre 90 g/m² et 110 g/m².

44. Procédé selon l'une des revendications 37 à 43, **caractérisé par** un procédé comportant des étapes selon l'une des revendications 21 à 31.
